# EUROPÄISCHE PATENTSCHRIFT

(11) **EP 4 428 034 B1**
(45) Veröffentlichungstag und Bekanntmachung des Hinweises auf die Patenterteilung: **12.11.2025**
(21) Anmeldenummer: 24191886.1
(22) Anmeldetag: 03.05.2022
(51) Int. Cl.: B64C 1/20, B64D 9/00

(54) **SEITENFÜHRUNG UND FRACHTDECK EINES FLUGZEUGS**
AIRCRAFT LATERAL GUIDE AND CARGO DECK
GUIDAGE LATÉRAL ET PONT DE CHARGEMENT D'UN AÉRONEF

(30) Priorität: 05.05.2021 DE 102021111705
(43) Veröffentlichungstag der Anmeldung: 11.09.2024
(62) Teilanmeldung aus: 22171450.4
(73) Patentinhaber: Telair International GmbH, 83714 Miesbach (DE)
(72) Erfinder: Patzlsperger, Andreas, 83666 Waakirchen (DE); Riedl, Jakob, 83737 Irschenberg (DE); Barauke, Christoph, 83734 Hausham (DE)
(74) Vertreter: Meissner Bolte Partnerschaft mbB

(56) Entgegenhaltungen:
- EP-B1- 2 399 826
- DE-A1- 102010 036 983
- DE-A1- 102019 124 312
- US-A1- 2019 276 148

## Beschreibung

Die Erfindung betrifft eine Seitenführung und ein Frachtdeck eines Flugzeugs. Eine Seitenführung gemäß dem Oberbegriff des Patentanspruchs 1 ist beispielsweise aus DE 10 2019 124 312 A1 bekannt.

Es ist bekannt, dass Laderäume von Flugzeugen für unterschiedliche Verwendungszwecke häufig umgebaut werden. Beispielsweise kann es notwendig sein, ein Frachtdeck in Abhängigkeit von den zu ladenden Frachtstücken zu konfigurieren. Bei dem Transport von Ladung in Flugzeugen werden häufig Frachtstücke, z.B. Container oder Paletten, mit genormten Abmessungen verwendet. So gibt es für Container, beispielsweise für die zivile Luftfahrt, folgende Normgrößen: 123,5 cm auf 317,5 cm (88 Zoll x 125 Zoll), 143,8 cm auf 317,5 cm (96 Zoll x 125 Zoll), 223,5 cm auf 157,5 cm (88 Zoll x 62 Zoll). Im militärischen Bereich werden häufig Paletten mit einer Abmessung von 274,3 cm auf 223,5 cm (108 Zoll x 88 Zoll) verwendet. Weiterhin nutzt man im militärischen Bereich Container, die von üblichen Normen abweichen und über Halteringe an den Ecken verfügen, so dass diese beispielsweise mit einem Kran gehoben werden können. Derartige Container werden als ISU Container bezeichnet. Sie haben im Wesentlichen die folgenden Bodenabmessungen: 274,3 cm auf 223,5 cm (108 Zoll x 88 Zoll). Ihre Höhe beträgt ca. 232 cm (91,35 Zoll).

Zum Fixieren und Führen derartiger genormter und nicht-genormter Frachtstücke werden auf dem Frachtdeck montierte Seitenführungen verwendet.

Für eine optimale Auslastung eines Frachtraums ist es notwendig, eine Vielzahl von Konfigurationsmöglichkeiten anzubieten, wobei ein schnelles Umrüsten des Frachtdecks eine hohe Priorität genießt. Geeignete Seitenführungen müssen daher schnell und einfach anbringbar und umkonfigurierbar sein, da die Kosten für das Betreiben von entsprechenden Flugzeugen sehr hoch sind. Des Weiteren soll die Konfiguration bzw. Umrüstung sehr einfach durchführbar sein, da das Personal, das diese Umkonfiguration durchführt, häufig keine oder lediglich eine schlechte Schulung für die verwendeten Frachtdecks genossen hat. Hinzu kommt, dass die Ausstattung des Frachtdecks, insbesondere die Seitenführungen sehr robust sein müssen, da diese sehr hohen Lasten ausgesetzt sind und eine schonende Behandlung aufgrund des hohen Zeitdrucks beim Be- und Entladen nicht gefordert werden kann. Ein Frachtdeck mit entsprechenden Seitenführungen ist häufig der Nässe, hohen Temperaturunterschieden, Staub und anderen rauen Einflüssen ausgesetzt. Ein defektes Frachtdeck, auch bereits ein defektes Funktionselement des Frachtdecks, kann dazu führen, dass das entsprechende Flugzeug für mehrere Tage nicht einsetzbar ist. Ein solcher Ausfall ist sehr teuer.

Aus der DE 10 2019 124 312 A1 sind Seitenführungen bekannt, die es ermöglichen, ein Frachtdeck schnell und einfach umzukonfigurieren, so dass unterschiedliche Frachtstücke mit unterschiedlichen Abmessungen geladen werden können. Ein Nachteil bei der in der DE 10 2019 124 312 A1 beschriebenen Seitenführung ist die Art der Verbindung zwischen dem längsverschiebbaren Fixierelement und der Seitenführungsschiene, bei der ein zylindrischer Abschnitt des Fixierelements in eine zylindrische Öffnung einer Einsatzplatte der Seitenführungsschiene zum Fixieren eingreift. An den zylindrischen Abschnitt des Fixierelements schließt ein kleinerer zylindrischer Abschnitt an, um die Seitenführungsschiene zu lösen. Bei hohen Vertikalkräften führt dies aufgrund der Winkelverhältnisse im Übergang zwischen den zylindrischen Abschnitten unterschiedlicher Durchmesser zu einer Keilwirkung und dadurch zum Aufbiegen der Einsatzplatte. Bei auftretenden hohen Vertikalkräften kann sich die Einsatzplatte und somit die Seitenführungsschiene von dem Fixierelement lösen. Ein sicheres Fixieren kann daher nicht gewährleistet werden.

Ferner werden bei den Seitenführungen gemäß DE 10 2019 124 312 A1 an der Seitenführungsschiene quer wirkende Zug- bzw. Druckkräfte indirekt, d.h. über die Schraubenverbindungen der Einsatzplatten, von der Schiene auf den Befestigungsrahmen übertragen. Insbesondere horizontale Kräfte, die in y-Richtung zur Flugzeugmitte hin oder von dieser wegwirken, führen stets über die Schraubverbindungen zwischen den Einsatzplatten und der Seitenführungsschiene. Dadurch treten hohe Biegebeanspruchungen in den Einsatzplatten auf. Ferner können die Schraubverbindungen zwischen den Einsatzplatten und der Seitenführungsschiene bei derart hohen Kräften versagen.

Der Erfindung liegt die Aufgabe zu Grunde, eine Seitenführung anzugeben, die eine Vielzahl von unterschiedlichen Konfigurationen ermöglicht, robust ist und eine erhöhte Betriebssicherheit aufweist. Ferner liegt der Erfindung die Aufgabe zu Grunde, ein Frachtdeck eines Flugzeugs anzugeben.

Erfindungsgemäß wird diese Aufgabe im Hinblick auf die Seitenführung durch den Gegenstand des Anspruchs 1 gelöst. Hinsichtlich des Frachtdecks wird die vorstehend genannte Aufgabe durch den Gegenstand des Anspruchs 15 gelöst.

Konkret wird die Aufgabe durch eine Seitenführung zum Führen und/oder Befestigen von Frachtstücken, insbesondere von Containern und/oder Paletten, in einem Flugzeug gelöst, die wenigstens eine Seitenführungsvorrichtung und wenigstens eine Halteeinheit für die Seitenführungsvorrichtung aufweist. Die Halteeinheit umfasst einen sich in Längsrichtung erstreckenden Befestigungsrahmen und wenigstens eine am Befestigungsrahmen angeordnete Festsetzvorrichtung, die eine Vielzahl von sich quer zur Längsrichtung erstreckende Aussparungen aufweist. Die Seitenführungsvorrichtung ist an unterschiedlichen Positionen in jeweils wenigstens eine der Aussparungen einlegbar und im eingelegten Zustand an den unterschiedlichen Positionen durch die Festsetzvorrichtung festsetzbar.Die Seitenführungsvorrichtung weist wenigstens ein Kontaktelement auf, das im eingelegten Zustand mit wenigstens einem in Längsrichtung verschiebbaren Fixierelement der Festsetzvorrichtung in Eingriff bringbar ist oder in Eingriff steht.

Die Festsetzvorrichtung ist in Längsrichtung verschiebbar in dem Befestigungsrahmen angeordnet und wenigstens ein Federelement vorgesehen, das an dem Befestigungsrahmen abstützend angeordnet ist und die Festsetzvorrichtung in Längsrichtung federnd lagert.

Im Flugbetrieb treten oft sogenannte "Wing Pinching"-Lastfälle auf, in denen sich die Tragflächen des Flugzeuges aufgrund hoher Windlasten nach oben bewegen und dadurch die Flugzeugstruktur des Frachtdecks in y-Richtung zur Flugzeugmitte hin verformt. Dabei bewegen sich im Frachtraum befindliche Seitenführungen für Paletten und Container nach innen und reduzieren die gesamte Spurbreite für die Paletten und Container. Dies kann dazu führen, dass es zu seitlichen Quetschungen an den Containern und Paletten kommt, sodass unzulässig hohe Kräfte auf die Flugzeugstruktur wirken.

Durch die federnde Lagerung der Festsetzvorrichtung und somit der Seitenführungsvorrichtung werden solche zusätzlichen Belastungen der Flugzeugstruktur durch erhöhte Querkräfte verhindert oder zumindest reduziert. Es ist möglich, bei einer Anordnung von Seitenführungen im Frachtraum, bei denen unterschiedliche Positionen in y-Richtung notwendig sind, die Seitenführungsvorrichtung an mehreren Positionen federnd auszugestalten. Bevorzugt weist die Seitenführung wenigstens zwei Federelemente auf, die die Festsetzvorrichtung in Längsrichtung an dem Befestigungsrahmen federnd abstützen. Vorzugsweise ist das Federelement gabelförmig angeordnet.

Die Festsetzvorrichtung ist vorzugsweise in dem Befestigungsrahmen geführt angeordnet, sodass ein Versatz in Längsrichtung realisierbar ist. Dies hat den Vorteil, dass durch den Flugbetrieb hervorgerufene Rumpfverformungen und der damit verbundene Versatz der Seitenführung in y-Richtung, insbesondere im Bereich des Flügelmittelkastens des Flugzeugs, ein Quetschen der Container und/oder Paletten verhindert wird. Die Seitenführungsvorrichtung ist durch die verschiebbare Festsetzvorrichtung in y-Richtung des Flugzeugs versatzausgleichend.

Seitenführungen in Flugzeugen werden üblicherweise dazu verwendet, Frachtstücke in Längsrichtung (X-Achse) des Flugzeugs (von Bug zu Heck, oder von Heck zu Bug) zu leiten. Während des Fluges nehmen diese Kräfte quer zur Längsrichtung (Y-Achse) auf und halten die Frachtstücke in ihrer Position. Die Führungsrollen greifen von unten an die Frachtstücke an und stützen diese ab. Sie ermöglichen einen einfachen und mit geringer Reibung behafteten Transport der Frachtstücke innerhalb des Frachtraums.

Bei der Verwendung der Seitenführung in einem Frachtraum werden Frachtstücke mit erhöhtem Gewicht transportiert bzw. gesichert.

Ein wesentlicher Gedanke der vorliegenden Erfindung besteht darin, dass die Seitenführungsvorrichtung, die die eigentliche Führungs- und Haltefunktion der Seitenführung in Bezug auf die Frachtstücke wahrnimmt, versetzbar in einem Befestigungsrahmen gelagert ist. Die Seitenführungsvorrichtung kann also vorzugsweise in Querrichtung des Flugzeugs (y-Achse) unterschiedliche Positionen einnehmen, um Frachtstücke mit unterschiedlichen Abmessungen, auch genormte Frachtstücke wie in der Einleitung beschrieben, zu halten und zu führen. Somit können zahlreiche Seitenführungsvorrichtungen, die an unterschiedlichen Positionen innerhalb eines Frachtdecks angeordnet werden müssen, eingespart werden. Die Positionen können so gewählt werden, dass Frachtstücke mit vorgegebenen Standardabmessungen geführt werden können.

Die Aussparungen können beispielsweise Schlitze sein, die nach oben hin offen sind. Insofern ermöglichen die Aussparungen einen Formschluss mit der einsetzbaren Seitenführungsvorrichtung, so dass Kräfte effizient abgeleitet werden können.

Zur Fixierung der Seitenführungsvorrichtung an dem Rahmen kann das Fixierelement eine Rotations- und/oder Translationsbewegung vornehmen. Vorzugsweise ist hierfür an dem Fixierelement ein Betätigungshebel vorgesehen. In einer Ausführungsform verfügt der Betätigungshebel und/oder der Rahmen über eine Kulisse, so dass durch das Betätigen des Betätigungshebels das Fixierelement in Längsrichtung der Seitenführung verschoben wird. Das Fixierelement ist bevorzugt durch eine Welle mit einer Längsachse gebildet.

Es ist möglich, die Seitenführungsvorrichtung teilweise als U-Schienenprofil oder als geschlossenes Mehrkantprofil mit abschnittsweisen Ausnehmungen für mehrere Kontaktelemente auszubilden. In einer Ausführungsform weist die Seitenführungsvorrichtung Riegel auf. Hierbei kann es sich um herkömmlich standardisierte Riegel handeln, die mittels ihrer Riegelnasen Randbereiche von Frachtpaletten und/oder Frachtcontainern umgreifen, um diese unter anderem in Z-Richtung des Flugzeugs zu fixieren. Alternativ oder zusätzlich können Riegel vorgesehen sein, die in entsprechende Aussparungen von Frachtpaletten und/oder Frachtcontainern eingreifen und diese in X-Richtung und/oder Z-Richtung des Flugzeugs absichern. Entsprechende Aussparungen sind bei militärischen Paletten häufig vorgesehen. Im Weiteren werden entsprechende Riegel für derartige militärische Paletten als "Side Lacks" bezeichnet. Die Seitenführungsvorrichtung kann also einen oder mehrere derartige Riegel aufweisen, wobei sich die Seitenführungsvorrichtung in einer Ausführungsform über mehrere Halteeinheiten erstreckt. Wenn sich die Seitenführungsvorrichtung über mehrere Seitenführungen erstreckt ist ausreichend Platz vorhanden, um mehrere Riegel auf oder an dieser anzuordnen.

Es ist möglich, die erfindungsgemäße Seitenführung derart auszubilden, dass sich der Befestigungsrahmen der Seitenführung schräg zur Querrichtung des Flugzeugs erstreckt. Beispielsweise kann die Längsrichtung des Befestigungsrahmens im 45°-Winkel zur Querrichtung des Flugzeugs verlaufen. Vorzugsweise verläuft der Befestigungsrahmen aber parallel zur Querrichtung (Y-Achse) des Flugzeugs.

Die Seitenführungsvorrichtung kann durch die Festsetzvorrichtung an mindestens zwei sich unterscheidenden Positionen an dem Befestigungsrahmen festgesetzt werden. Vorzugsweise lässt sich die Seitenführungsvorrichtung jedoch an einer Vielzahl von Positionen festsetzen, so dass diese bei sich unterscheidenden Konfigurationen des Frachtdecks mit den Frachtstücken zusammenwirken kann.

Bei einer besonders bevorzugten Ausführungsform weist das wenigstens eine Kontaktelement wenigstens einen innenseitigen Abstützabschnitt für die Festsetzvorrichtung zum Einleiten von auftretenden Kräften auf. Zusätzlich oder alternativ weist vorzugsweise das Kontaktelement wenigstens einen Formschlussabschnitt mit wenigstens einer von einer kreisrunden Form abweichenden Querschnittskontur aufweisenden Öffnung zum Eingreifen des Fixierelements auf.

Das Kontaktelement bildet vorzugsweise ein zentrales Element, das mit dem innenseitigen Abstützabschnitt und dem Formschlussabschnitt wesentliche Funktionen erfüllt. Der innenseitige Abstützabschnitt dient zur Übertragung von auftretenden Querkräften in Querrichtung (y-Richtung) des Flugzeugs an der Seitenführungsvorrichtung auf die Festsetzvorrichtung, die mit dem Befestigungsrahmen verbunden ist. Über den innenseitigen Abstützabschnitt werden im Belastungsfall die Querkräfte in die Festsetzvorrichtung eingeleitet, die wiederum die eingeleiteten Kräfte an den, bevorzugt an einer Flugzeugstruktur befestigten, Befestigungsrahmen weitergibt. Vorzugsweise erfolgt die Übertragung der Querkräfte zwischen dem innenseitigen Abstützabschnitt des Kontaktelements auf die Festsetzvorrichtung direkt, d.h. ohne Zwischenelement. Eine indirekte Kraftübertragung ist allerdings alternativ möglich.

Durch die Anordnung bzw. die Ausbildung des Abstützabschnitts auf einer Innenseite des Kontaktelements werden die Querkräfte vorzugsweise unabhängig ob Zugkraft und/oder Druckkraft, stets auf Druck von dem Kontaktelement auf die Festsetzvorrichtung übertragen. Der Abstützabschnitt dient nicht nur dazu die Querkräfte auf Druck an die Festsetzvorrichtung zu übertragen, sondern zusätzlich zur Aufnahme der Querkräfte auf Druck. Mit anderen Worten ist der Abstützabschnitt vorzugsweise dazu ausgebildet, die an der Seitenführungsvorrichtung, insbesondere an einer Seitenführungsschiene, angreifenden Querkräfte (Zug- und/oder Druckkräfte) auf Druck aufzunehmen und auf Druck an die Festsetzvorrichtung zu übertragen. Dadurch wird verhindert, dass der Kraftfluss der aufgenommenen Querkräfte über Befestigungsmittel zur Befestigung des Kontaktelements an beispielsweise einer Seitenführungsschiene der Seitenführungsvorrichtung geführt wird, da die Kraftübertragung über einen oder mehrere Bauteilkontakte auf Druck erfolgt. Ein Versagen der Befestigungsmittel aufgrund von Querkräften wird dadurch verhindert, sodass die Betriebssicherheit der Seitenführung erhöht ist.

Im Rahmen der Anmeldung ist unter dem innenseitigen Abstützabschnitt zu verstehen, dass der Abstützabschnitt auf einer Innenseite des Kontaktelements ausgebildet ist, die in einem Innenraum der Seitenführungsvorrichtung, insbesondere in einer Seitenführungsschiene, zumindest abschnittsweise integriert angeordnet ist.

Der innenseitige Abstützabschnitt kann flächig ausgebildet sein. Zusätzlich oder alternativ kann der innenseitige Abstützabschnitt gestuft ausgebildet sein. Andere Formen des innenseitigen Abstützabschnitts sind möglich.

Bei der vorgenannten Ausführungsform ist der Formschlussabschnitt Teil des Kontaktelements und umfasst eine Öffnung, in die das Fixierelement zum Festsetzen der Seitenführungsvorrichtung im eingelegten Zustand eingreift. Mit anderen Worten ist die Seitenführungsvorrichtung durch den Formschluss zwischen dem Fixierelement und dem Formschlussabschnitt in z-Richtung gehalten. Die Öffnung weist eine von einer kreisrunden Form abweichende Querschnittskontur auf. Mit anderen Worten weist die Öffnung eine von einer zylindrischen Form abweichende Form auf. Die Öffnung entspricht somit keiner kreisrunden Bohrung.

Aus der beschriebenen Öffnungsform ergibt sich der Vorteil, dass bei Beanspruchung der Seitenführungsvorrichtung, insbesondere der Seitenführungsschiene, auf Torsion um deren Längsachse keine erhöhte Keilwirkung durch das Verkeilen des Kontaktelements und des Fixierelements an der Öffnung entsteht. Die beschriebene Öffnungsform ermöglicht eine stabile und feste Verbindung mit dem Fixierelement, sodass unzulässige Biegekräfte, insbesondere im Bereich eines Übergangs zu einer angrenzenden Lösekontur des Fixierelements, verhindert werden. Dadurch ist die Betriebssicherheit der Seitenführung weiter erhöht, da durch die Öffnungsform ein Lösen der Formschlussverbindung zwischen dem Fixierelement und dem Formschlussabschnitt unterbunden wird. Des Weiteren werden bei der Verwendung der Seitenführung in einem Frachtraum Frachtstücke mit erhöhtem Gewicht transportiert bzw. gesichert.

Bei einer weiteren besonders bevorzugten Ausführungsform weist das Fixierelement wenigstens eine Fixierungskontur auf, mit der das Fixierelement in einer Fixierstellung in die Querschnittskontur der Öffnung zum Festsetzen der Seitenführungsvorrichtung formschlüssig eingreift. Dabei befindet sich die Seitenführungsvorrichtung in dem eingelegten Zustand, d.h. sie ist in zumindest eine der Aussparungen eingelegt. Die Fixierungskontur kann zur Querschnittskontur der Öffnung komplementär ausgebildet sein. Mit anderen Worten kann die Fixierungskontur eine Positivform zur Querschnittskontur der Öffnung als Negativform sein. In der Fixierstellung steht die Fixierungskontur mit der Querschnittskontur in Eingriff. Dabei kann die Fixierungskontur an der Querschnittskontur in Längsrichtung des Befestigungsrahmens verschiebbar anliegen. Durch die Formschlussverbindung zwischen der Fixierungskontur und der Querschnittskontur ist die Seitenführungsvorrichtung an der entsprechend eingelegten Position sicher festgesetzt.

Bevorzugt weisen die Fixierungskontur des Fixierelements und/oder die Querschnittskontur der Öffnung wenigstens einen zumindest teilweise kreisförmigen Konturabschnitt und wenigstens einen geradlinigen Konturabschnitt auf. Mit anderen Worten ist die Fixierungskontur und/oder die Querschnittskontur durch zumindest einen kreisförmigen und einen geradlinigen Konturabschnitt gebildet.

Bevorzugt weist die Fixierungskontur und/oder die Querschnittskontur mehrere geradlinige Konturabschnitte auf. Die geradlinigen Konturabschnitte sind vorzugsweise durch Abflachungen gebildet. Die Abflachungen sind bevorzugt durch Fräsen hergestellt.

Besonders bevorzugt ist die Fixierungskontur und/oder die Querschnittskontur pilzförmig ausgebildet. Dabei ist vorzugsweise die Querschnittskontur der Öffnung in Bezug auf die Längsrichtung des Befestigungsrahmens stehend ausgebildet. Dies trifft auf die Fixierungskontur des Fixierelements zumindest in der Fixierstellung ebenso zu. Bei dieser Ausführungsform ist eine besonders stabile Formschlussverbindung geschaffen, durch die ein Lösen des Kontaktelements und somit der Seitenführungsvorrichtung von dem Fixierelement verhindert wird.

Weiter bevorzugt weist das Fixierelement wenigstens eine Lösekontur mit wenigstens einer Abflachung auf, die in Längsrichtung an die Fixierungskontur angrenzt und derart ausgebildet ist, dass die Seitenführungsvorrichtung in einer Lösestellung des Fixierelements in wenigstens eine der Aussparungen einlegbar oder aus dieser entnehmbar ist. Vorzugsweise umfasst die Lösekontur zumindest zwei an einer Längsachse gegenüberliegende Abflachungen. Die Fixierungskontur und die Lösekontur weisen vorzugsweise jeweils eine Abflachung auf, die in die jeweils angrenzende kontinuierlich übergeht. Besonders bevorzugt fluchten die jeweils aneinander angrenzenden Abflachungen. Durch die abgeflachte und an die Fixierungskontur angrenzende Lösekontur ist ein Übergang zwischen den Konturen geschaffen, der im Vergleich zu einem Übergang zwischen zwei zylindrischen Konturen einen erhöhten Restquerschnitt aufweist. Dadurch ist die Steifigkeit des Fixierelements besonders im Übergang erhöht und somit eine Keilwirkung auf den Öffnungsquerschnitt des Kontaktelements verringert beziehungsweise verhindert.

Das Kontaktelement ist vorzugsweise durch einen plattenförmigen Verstärkungseinsatz, insbesondere eine Stahl-Einsatzplatte, gebildet, der mit einem Schienenelement der Seitenführungsvorrichtung fest verbunden ist. Das Schienenelement weist vorzugsweise ein umlaufend geschlossenes Profil, insbesondere Mehrkantprofil, das an wenigstens einer Position für das Kontaktelement eine Ausnehmung, insbesondere Ausfräsung aufweist. Bei hohen Querkräften, die an der Seitenführungsvorrichtung angreifen, ist es notwendig den Kontaktpunkt zwischen der Seitenführungsvorrichtung und der Halteeinheit, konkret der Festsetzvorrichtung zu verstärken. Dies ist hier durch den Verstärkungseinsatz gelöst, der vorzugsweise mit der Seitenführungsschiene der Seitenführungsvorrichtung, insbesondere durch wenigstens eine Schraubverbindung, fest verbunden ist.

Bei einer besonders bevorzugten Ausführungsform greift die Festsetzvorrichtung mit wenigstens einem ersten Gehäusebereich im eingelegten Zustand in ein Schienenelement, insbesondere die Seitenführungsschiene, der Seitenführungsvorrichtung ein. Der erste Gehäusebereich umfasst in Längsrichtung wenigstens einen Anschlag für den Abstützabschnitt des Kontaktelements, um auftretende Kräfte von dem Schienenelement aufzunehmen. Mit anderen Worten stehen der Anschlag des ersten Gehäuseteils und zumindest ein erster Teil des Abstützabschnitts im Belastungsfall in Kontakt. Bei auftretenden Querkräften werden diese von dem Abstützabschnitt auf den Anschlag bevorzugt direkt übertragen. Hierbei ist vorteilhaft, dass die Kraftübertragung stets auf Druck erfolgt und somit etwaige Befestigungsmittel des Kontaktelements geschont werden.

Die Aussparungen sind vorzugsweise derart an der Festsetzvorrichtung vorgesehen, dass die Seitenführungsvorrichtung in zumindest zwei an dem ersten Gehäusebereich gegenüberliegenden Aussparungen festsetzbar ist.

Bei einer weiteren bevorzugten Ausführungsform weist die Festsetzvorrichtung wenigstens einen zweiten Gehäusebereich auf, der im eingelegten Zustand der Seitenführungsvorrichtung von dem Kontaktelement beabstandet ist und mit dem ersten Gehäusebereich zumindest eine der Aussparungen an wenigstens einer der unterschiedlichen Positionen begrenzt. Mit anderen Worten begrenzen jeweils ein erster Gehäusebereich und ein gegenüberliegender zweiter Gehäusebereich eine der Aussparungen in Längsrichtung des Befestigungsrahmens. Oder anders gesagt, sind die beiden Gehäusebereiche in Längsrichtung voneinander beabstandet, sodass eine der Aussparungen dazwischenliegt und somit einen Spalt bildet. Durch den Abstand zwischen dem zweiten Gehäusebereich und dem Kontaktelement wird gewährleistet, dass im Belastungsfall Querkräfte stets über den innenseitigen Abstützabschnitt auf den ersten Gehäusebereich übertragen werden. Dies ist wesentlich dafür, dass der Kraftfluss der Querkräfte nicht über die Befestigungsmittel des Kontaktelements geleitet wird, sondern über den innenseitigen Abstützabschnitt.

Bei einer bevorzugten Ausführungsform umfasst der Abstützabschnitt wenigstens eine Stufe, mit der ein Schienenelement, insbesondere die Seitenführungsschiene, der Seitenführungsvorrichtung in Kontakt steht, um die auftretenden Kräfte, insbesondere Zug- und Druckkräfte, in Längsrichtung des Befestigungsrahmens auf die Festsetzvorrichtung zu übertragen. Die Stufe bildet den zweiten Teil des Abstützabschnitts. Die Stufe ist vorzugsweise einem Schenkel des Schienenelements zugewandt. Mit anderen Worten ist die Stufe auf der dem Anschlag des ersten Gehäusebereichs der Festsetzvorrichtung abgewandten Seite des Kontaktelements ausgebildet. Die Stufe bildet für das Schienenelement einen Sitz, mit dem das Schienenelement in Kontakt steht. Dies kann ein direkter oder indirekt Kontakt sein. Über die Stufe stützt sich das Schienenelement an dem Kontaktelement ab, sodass im Belastungsfall Querkräfte (in y-Richtung) gezielt aufgenommen werden.

Der Abstützabschnitt weist vorzugsweise wenigstens eine innenliegende Anlagefläche auf, die dem ersten Gehäuseteil zur Anlage zugewandt ist. Die Anlagefläche ist im eingelegten Zustand der Seitenführungsvorrichtung dem Anschlag des ersten Gehäusebereichs zugewandt. Im Belastungsfall durch auftretende Querkräfte steht die innenliegende Anlagefläche des Abstützabschnitts mit dem ersten Gehäuseabschnitt in, vorzugsweise direktem, Kontakt. Der Anschlag und die Anlagefläche können alternativ indirekt in Kontakt stehen. Über die flächige Anlagefläche ist im Fall von Querkräften ein flächiger Kontakt zum Anschlag des ersten Gehäusebereichs möglich, wodurch die Kräfte optimiert in die Festsetzvorrichtung eingeleitet werden.

Erfindungsgemäß ist die Festsetzvorrichtung in Längsrichtung verschiebbar in dem Befestigungsrahmen angeordnet. Mit anderen Worten ist die Festsetzvorrichtung in Längsrichtung beweglich, insbesondere schwimmend, angeordnet. Hier können ein Schlitten, der die Gehäusebereiche umfasst, sowie das darin gelagerte Fixierelement gemeinsam in Längsrichtung verschiebbar sein.

Bei einer Ausführungsform weist die Seitenführung wenigstens einen Riegel mit einer zumindest abschnittsweise zweigeteilten Riegelkralle auf, der am Befestigungsrahmen derart befestigt ist, dass die zweigeteilte Riegelkralle von einer hochgestellten Arbeitsposition in eine abgesenkte Ruheposition verschwenkbar ist. Die Riegelkralle kann einen Anschlag umfassen, der mit der Riegelkralle von einer hochgestellten Arbeitsposition in eine abgesenkte Ruheposition verschwenkbar ist. Die Riegelkralle kann abgesenkt werden, so dass diese von Frachtstücken, insbesondere Containern und/oder Paletten, überfahrbar ist. Somit lassen sich weitere Konfigurationen des Frachtdecks gewährleisten, bei denen der Riegel die Funktion des Führens und/oder Haltens der Frachtstücke übernimmt. Auf Grund der Abklappbarkeit des Riegels kann eine Konfiguration des Frachtdecks geschaffen werden, die keine zur Seitenführungsvorrichtung zusätzliche Führung übernimmt und beispielsweise von einem Fahrzeug befahren werden kann.

Der Riegel kann um eine Schwenkachse drehbeweglich am Befestigungsrahmen befestigt sein, wobei die Schwenkachse derart angeordnet ist, dass beim Halten von Frachtstücken auftretende Kräfte in den Befestigungsrahmen geleitet werden. Insofern wirkt die Schwenkachse als Drehgelenk und leitet gleichzeitig in der Arbeitsposition die auftretenden Kräfte effizient in den Befestigungsrahmen ein.

Die Riegelkralle des Riegels kann auf mindestens einer Seite Schrägflächen aufweisen, um diese aus der Arbeitsposition in die Ruheposition beim Überfahren durch ein Frachtstück in einer Richtung zu bewegen, die ungleich einer Halterichtung der Riegelkralle ist.

Durch die zweigeteilte Riegelkralle wird Bauraum eingespart, sodass ein mit dem Fixierelement kombinierter Einbau möglich ist. Ferner können durch die zweigeteilte Ausgestaltung der Riegelkralle sogenannte "B-Code Military"-Paletten gehalten werden. Diese verfügen über abschnittsweise unterbrochene Palettenkanten mit ca. 7 cm (2,75 Zoll) breiten Aussparungen. Durch die gabelförmige Riegelkralle wird unabhängig von der endgültigen Transportposition der Paletten das Sichern bzw. Halten der Frachtstücke erreicht. Somit wird eine verbesserte Anwendbarkeit der Seitenführung für "B-Code Military"-Paletten realisiert.

Bei einer bevorzugten Ausführungsform ist der Riegel an dem Befestigungsrahmen derart befestigt, dass die Riegelkralle des Riegels von einer Arbeitsposition in eine rückgestellte Parkposition verschwenkbar ist. In der Parkposition ist die Riegelkralle in die von einem Längsende des Befestigungsrahmens abgewandte Richtung gekippt. In der Parkposition ist die Riegelkralle festgehalten. Dazu kann wenigstens ein verschiebbares Backenstück am bzw. im Befestigungsrahmen angeordnet sein, das die Riegelkralle fixiert. In der Parkposition der Riegelkralle ist vor dieser derart Platz geschaffen, dass die Seitenführungsvorrichtung bzw. das Schienenelement an einer vorgelagerten Position festsetzbar ist. Dadurch wird die Kollision der Riegelkralle mit der Seitenführungsvorrichtung beim Platzieren verhindert.

Das Fixierelement kann einen in Längsrichtung abgeflachten Bereich zur Aufnahme eines quer zur Längsrichtung verlaufenden Brückenelements der zweigeteilten Riegelkralle aufweisen. Das Brückenelement erstreckt sich vorzugsweise quer zur Längsrichtung des Befestigungsrahmens und verbindet die beiden Krallenfortsätze der Riegelkralle. Bei dieser Ausführungsform ist vorteilhaft, dass beim Überfahren bzw. generell beim Abklappen der Riegelkralle das Brückenelement durch den an der Abflachung freigestellten Bereich aufgenommen wird. Dadurch wird eine platzsparende bzw. kompakte Bauform realisiert.

Vorzugsweise weist die Festsetzvorrichtung zumindest zwei der Aussparungen an einem Längsende des Befestigungsrahmens auf, wobei der Riegel mit der zweigeteilten Riegelkralle innenseitig angrenzt. Mit anderen Worten ist die zweigeteilte Riegelkralle von dem Längsende nach innen entlang des Befestigungsrahmens derart versetzt, dass im Bereich des Längsendes eine der unterschiedlichen Positionen für die Seitenführungsvorrichtung vorgesehen ist. Dadurch wird die Konfigurationsmöglichkeit eines Frachtdecks weiter erhöht.

Die Festsetzvorrichtung kann wenigstens drei, insbesondere wenigstens vier, Paare der Aussparungen umfassen, sodass die Seitenführungsvorrichtung an wenigstens drei, insbesondere vier, unterschiedlichen Positionen festsetzbar ist. Es ist möglich, dass die Festsetzvorrichtung wenigstens fünf Paare der Aussparungen aufweist, sodass die Seitenführungsvorrichtung an fünf unterschiedlichen Positionen festsetzbar ist. Generell ermöglicht die Seitenführung in dieser Ausführungsform eine Vielzahl an unterschiedlichen Konfigurationen, insbesondere des Frachtdecks.

Bei einer Ausführungsform ist wenigstens eine Führungsrolle in einem Rollengehäuse drehbeweglich gelagert, das an unterschiedlichen Positionen in jeweils wenigstens eine der Aussparungen einlegbar oder eingelegt ist. Dadurch wird der Transport der Frachtstücke erleichtert. Moderne Frachtdecks sind so dicht mit Funktionselementen (z.B. Seitenführungen, Führungsrollen, Riegelkrallen, PDUs) bestückt, dass es häufig schwierig ist, den richtigen Platz für die nötigen Funktionselemente auf dem Frachtdeck zu finden. Durch das gezielte Einsparen von Führungsrollen und Anordnen von Führungsrollen an Seitenführungen wird im Frachtdeck Platz eingespart.

Nach einem nebengeordneten Aspekt betrifft die Erfindung ein Frachtdeck eines Flugzeugs mit wenigstens einer Seitenführung der vorstehend genannten Art, wobei die Seitenführung eine Vielzahl von Halteeinheiten aufweist, an denen die Seitenführungsvorrichtung festgesetzt oder festsetzbar ist.

Zu den Vorteilen des Frachtdecks wird auf die im Zusammenhang mit der Seitenführung erläuterten Vorteile verwiesen. Darüber hinaus kann das Frachtdeck alternativ oder zusätzlich einzelne oder eine Kombination mehrerer zuvor in Bezug auf die Seitenführung genannte Merkmale aufweisen, insofern als sie unter den Schutzbereich der beigefügten Ansprüche fallen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Seitenführung ausgestaltet sein kann.

In diesen zeigen,
- Fig. 1: eine perspektivische Ansicht einer Seitenführung mit einer Halteeinheit und einer Seitenführungsvorrichtung nach einem bevorzugten erfindungsgemäßen Ausführungsbeispiel;
- Fig. 2: eine Draufsicht auf eine Halteeinheit der Seitenführung gemäß Fig. 1, wobei die Seitenführungsvorrichtung ausgeblendet ist;
- Fig. 3: eine Seitenansicht der Seitenführung gemäß Fig. 1;
- Fig. 4: einen Schnitt durch die Seitenführung gemäß Fig. 1 entlang der in Fig. 3 dargestellten Schnittlinie A-A;
- Fig. 5: eine Teilansicht eines Schnitts durch die Seitenführung gemäß Fig. 1 entlang der in Fig. 3 dargestellten Schnittlinie C-C;
- Fig. 6: eine Teilansicht eines Schnitts durch die Seitenführung gemäß Fig. 1 entlang der in Fig. 4 dargestellten Schnittlinie D-D;
- Fig. 7: eine Frontansicht der Seitenführung gemäß Fig. 1;
- Fig. 8: eine Teilansicht eines Schnitts durch die Seitenführung gemäß Fig. 1 entlang der in Fig. 7 dargestellten Schnittlinie B-B;
- Fig. 9: eine perspektivische Ansicht einer Seitenführung nach einem weiteren erfindungsgemäßen Ausführungsbeispiel, wobei die Seitenführungsvorrichtung ausgeblendet ist;
- Fig. 10: eine Draufsicht der Seitenführung gemäß Fig. 9; und
- Fig. 11: eine Explosionsdarstellung einer Festsetzvorrichtung sowie einer Führungsrolleneinheit der Seitenführung gemäß Fig. 9.

In der nachfolgenden Beschreibung werden für gleiche und gleich wirkende Teile dieselben Bezugsziffern verwendet.

Üblicherweise verwendet man ein kartesisches Koordinatensystem, um innerhalb eines Flugzeugs einzelne Richtungsangaben bereitzustellen. Hierbei erstreckt sich die X-Achse vom Heck zum Bug, die Y-Achse verläuft quer zur X-Achse und liegt im Wesentlichen in der von den Flügeln aufgespannten Ebene. Die Z-Achse steht senkrecht auf der X- und Y-Achse.

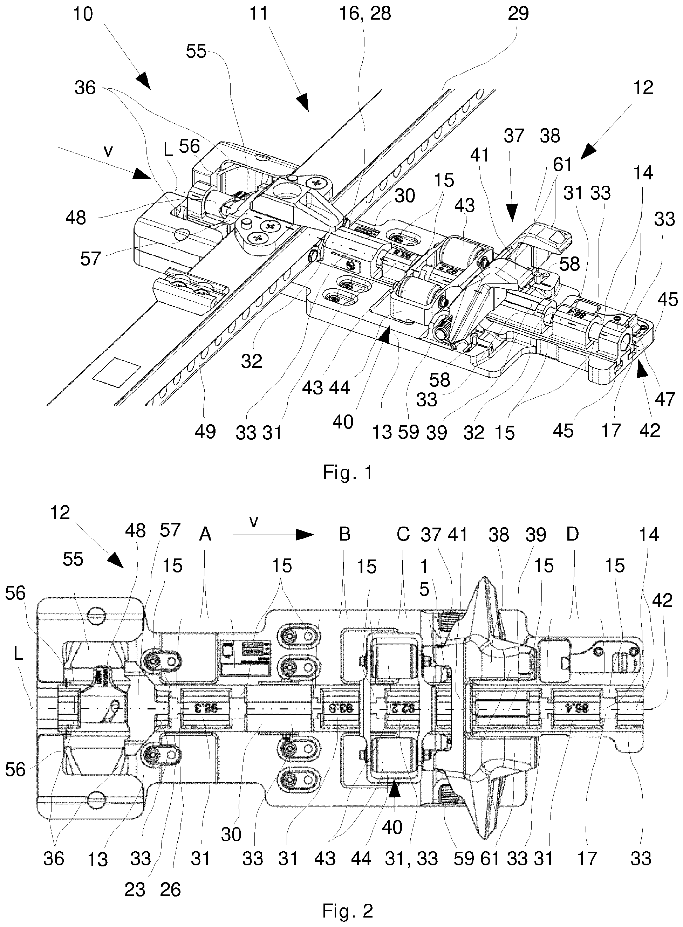

Fig. 1 bis 8 zeigen eine Seitenführung 10 nach einem bevorzugten erfindungsgemäßen Ausführungsbeispiel, wobei die Seitenführung 10 eine Seitenführungsvorrichtung 11 und eine Halteeinheit 12 für die Seitenführungsvorrichtung 11 aufweist. Die Seitenführung 10 dient zum Führen und Halten bzw. Fixieren von Frachtstücken in einem Frachtdeck eines Flugzeugs. Als Frachtstücke kommen Container sowie Paletten oder dergleichen zum Einsatz.

Die Seitenführungsvorrichtung 11 ist an der Halteeinheit 12 an unterschiedlichen Positionen A, B, C, D festsetzbar. Dies hat den Vorteil, dass die Seitenführungsvorrichtung 11, die die eigentliche Führungs- und Haltefunktion in Bezug auf die Frachtstücke übernimmt, entlang der Halteeinheit 12 versetzbar und somit bei der Verwendung in einem Frachtdeck eines Flugzeugs an die unterschiedlichen Spurbreiten der Container bzw. Paletten anpassbar ist.

Die Halteeinheit 12 umfasst einen Befestigungsrahmen 13, der eine Längserstreckung aufweist. Mit anderen Worten erstreckt sich der Befestigungsrahmen 13 in eine Längsrichtung v. Auf den Befestigungsrahmen 13 wird später näher eingegangen.

Des Weiteren weist die Halteeinheit 12 eine Festsetzvorrichtung 14 auf, die an dem Befestigungsrahmen 13 in Längsrichtung v verschiebbar angeordnet ist. Konkret ist die Festsetzvorrichtung 14 in sowie gegen die Längsrichtung v verschiebbar angeordnet. Die Festsetzvorrichtung 14 weist ein sich entlang der Längsrichtung v erstreckendes Gehäuse 30 auf. Das Gehäuse 30 umfasst eine Längsachse L, die parallel zur Längsrichtung v des Befestigungsrahmens 13 verläuft. Das Gehäuse 30 ist an dem Befestigungsrahmen 13 in Längsrichtung v verschiebbar angeordnet. Das Gehäuse 30 weist Führungsfortsätze 45 auf, die in Längsrichtung ausgebildete Ausnehmungen 46 des Befestigungsrahmens 13 eingreifen. Konkret bilden die Ausnehmungen 46 zwei in Längsrichtung ausgebildete T-Nuten, in die die Führungsfortsätze 45 längsverschieblich eingreifen. Die Führungsfortsätze 45 sind T-förmig ausgebildet und greifen derart in die Ausnehmungen 46 ein, dass das Gehäuse 30 in Z-Richtung, insbesondere des Flugzeugs, gesichert ist.

Das Gehäuse 30 weist des Weiteren eine Durchgangsbohrung 47 auf, die das Gehäuse 30 entlang der Längsachse L durchdringt. In der Durchgangsbohrung 47 ist ein Fixierelement 17 der Festsetzvorrichtung 14 längsverschieblich angeordnet, um die Seitenführungsvorrichtung 11 an einer der unterschiedlichen Positionen A, B, C, D festzusetzen. Auf das Fixierelement 17 wird später näher eingegangen.

Das Gehäuse 30 weist mehrere Gehäusebereiche 31, 33 auf, die entlang der Längsachse L in Reihe angeordnet sind. Die Durchgangsbohrung 47 durchdringt die Gehäusebereiche 31, 33 vollständig. Das Gehäuse 30 ist einteilig ausgebildet. Alternativ kann das Gehäuse 30 aus mehreren Einzelteilen zusammengefügt sein. Jeweils zwei benachbarte Gehäusebereiche 31, 33 sind entlang der Längsachse L voneinander beabstandet. Zwischen jeweils zwei benachbarten Gehäusebereichen 31, 33 ist jeweils eine Aussparung 15 ausgebildet, die sich zur Längsachse L erstreckt. Die Aussparung 15 ist jeweils an einem ersten der Gehäusebereiche 31 in Längsrichtung v beidseitig ausgebildet. Wie in Fig. 2 bis 4 erkennbar ist, umfasst das Gehäuse 30 insgesamt vier erste Gehäusebereiche 31. Die beiden Aussparungen 15, die an eines der ersten Gehäusebereiche 31 angrenzen, bilden ein Aussparungspaar, in das ein Schienenelement 29 der Seitenführungsvorrichtung 11 einsetzbar ist. Jeweils ein Aussparungspaar stellt eine der unterschiedlichen Positionen A, B, C, D dar, an der die Seitenführungsvorrichtung 11 festsetzbar ist. Insgesamt sind sieben Aussparungen 15 entlang der Längsachse L ausgebildet. An den beiden Positionen B, C grenzen zwei erste Gehäusebereiche 31 aneinander. Die beiden zugeordneten Aussparungspaare teilen sich daher eine gemeinsame Aussparung 15.

Insgesamt weist die Seitenführung 10 gemäß Fig. 1 bis 8 vier Positionen A, B, C, D entlang der Längsachse L auf, an der die Seitenführungsvorrichtung 11 festgesetzt werden kann. Die Fig. 1, 3, 4 und 6 zeigen exemplarisch die Seitenführungsvorrichtung 11 an der ersten Position A.

Wie vorstehend genannt umfasst die Festsetzvorrichtung 14 ein Fixierelement 17, das in dem Gehäuse 30 entlang der Längsachse L verschiebbar angeordnet ist. Konkret ist das Fixierelement 17 eine Fixierwelle, die in der Durchgangsbohrung 47 des Gehäuse 30 zum Festsetzen und Lösen der Seitenführungsvorrichtung 11 längsbeweglich gelagert ist. Im Folgenden wird das Fixierelement 17 als Fixierwelle mit derselben Bezugsziffer bezeichnet.

Das Verschieben der Fixierwelle 17 erfolgt in dem gezeigten Ausführungsbeispiel durch einen Betätigungshebel 48, der über eine Kulissenführung verfügt. Im Ausführungsbeispiel ist ein Zapfen an der Fixierwelle 17 befestigt. Dieser Zapfen greift in die Kulissenführung des Betätigungshebels 48 ein, der seinerseits um die Fixierwelle 17 rotiert werden kann. Durch die Rotation des Betätigungshebels 48 wird der Zapfen in Längsrichtung v des Befestigungsrahmens 13, insbesondere entlang der Längsachse L des Gehäuses 30, verschoben, wodurch sich die Fixierwelle 17 in einer entsprechenden Translationsbewegung verschiebt. Durch den Betätigungshebel 48 ist die Fixierwelle 17 in eine Fixierstellung und eine Lösestellung bringbar. In der Fixierstellung setzt die Fixierwelle 17 die Seitenführungsvorrichtung 11 an einer der unterschiedlichen Positionen A, B, C, D fest. In der Lösestellung ist die Seitenführungsvorrichtung 11 aus entsprechenden Aussparungspaar entnehmbar und kann bei Bedarf an einer anderen Position A, B, C, D in ein weiteres Aussparungspaar eingelegt und fixiert werden.

Zum Festsetzen und Lösen des Schienenelements 29 der eingelegten Seitenführungsvorrichtung 11 weist die Fixierwelle 17 eine Fixierungskontur 23 und eine Lösekontur 26 auf. Die beiden Konturen 23, 26 grenzen aneinander in Längsrichtung v an. Die Fixierwelle 17 weist für jede Aussparung 15 des Gehäuses 30 eine Fixierungskontur 23 und eine Lösekontur 26 auf. Mit anderen Worten umfasst die Fixierwelle 17 eine Vielzahl von Fixierungs- und Lösekonturen 23, 26, um das Schienenelement 29 der Seitenführungsvorrichtung 11 an den Positionen A, B, C, D fixieren zu können.

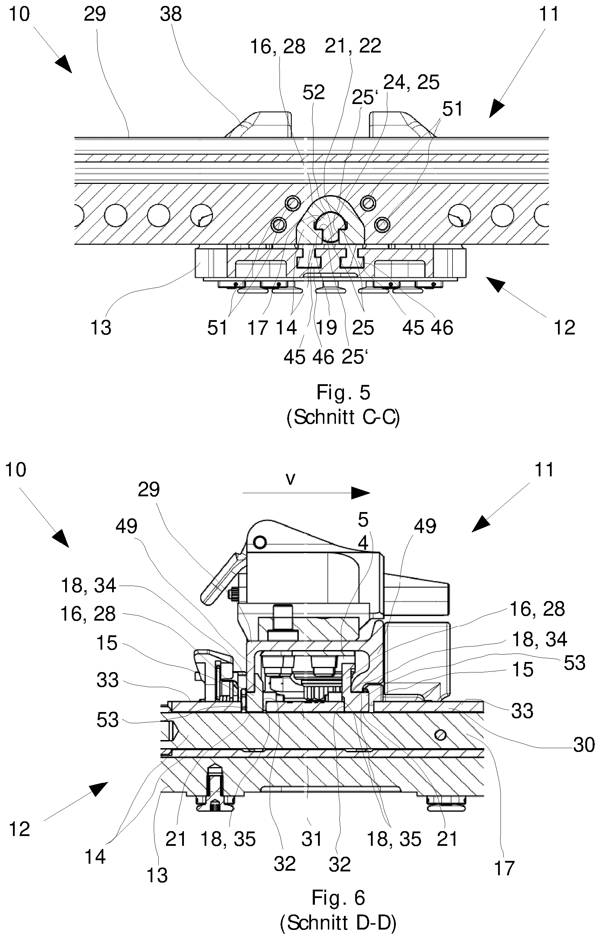

Wie in dem in Fig. 5 dargestellten Schnitt C-C zu erkennen ist, weist die Fixierungskontur 23 der Fixierwelle 17 ein von einer kreisrunden Form abweichendes Querschnittsprofil auf. Fig. 5 zeigt die Fixierwelle 17 in der Fixierstellung, in der die Fixierwelle 17 mit der Fixierungskontur 23 in die Seitenführungsvorrichtung 11 formschlüssig eingreift und diese arretiert. Konkret wirkt die Fixierungskontur 23 der Fixierwelle 17 in der Fixierstellung mit einer Querschnittskontur 22 einer Öffnung 21 des Schienenelements 29 formschlüssig zusammen.

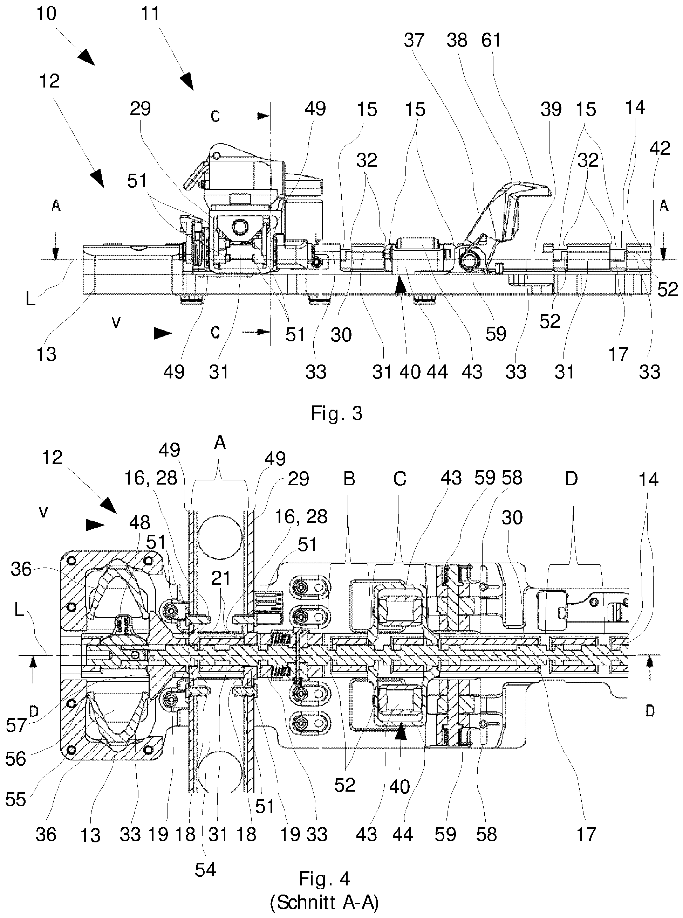

Für die Aufnahme und Übertragung von hohen Lasten, weist die Seitenführungsvorrichtung 11 gemäß Fig. 1 bis 8 Kontaktelemente 16 auf, die in das vorgenannte Schienenelement 29 eingesetzt sind. Die Kontaktelemente 16 sind jeweils durch einen plattenförmigen Verstärkungseinsatz 28 gebildet. Der Verstärkungseinsatz 28 ist vorzugsweise eine Stahlplatte. Gemäß diesem Ausführungsbeispiel sind jeweils zwei Verstärkungseinsätze 28 an Längsschenkeln 49 des Schienenelements 49 einander gegenüberliegend angeordnet. Das Schienenelement 29 umfasst ein längliches Mehrkantprofil, das vorzugsweise aus Aluminium besteht. Das Schienenelement 29 weist Ausnehmungen an den Längsschenkeln 49 auf, in die die Verstärkungseinsätze 28 eingesetzt sind. Zusätzlich sind die Verstärkungseinsätze 28 an dem Schienenelement 29 durch mehrere Befestigungsmittel 51 befestigt. Die Befestigungsmittel 51 sind im konkreten Fall Schrauben. Die Schraubenverbindung zwischen den jeweiligen Verstärkungseinsätzen 28 und dem Schienenelement 29 sind beispielsweise in Fig. 4 gut erkennbar.

Das Schienenelement 29 ist im eingelegten und festgesetzten Zustand in den Fig. 1, 3, 4 und 6 gezeigt. Exemplarisch ist darin das Schienenelement 29 an der Position A in das zugehörige Aussparungspaar eingelegt und durch die Fixierwelle 17 gegen ein Abheben fixiert. In dieser Fixierstellung greift die Fixierwelle 17 mit der Fixierungskontur 23 in die Öffnung 21 eines Formschlussabschnitts 19 des jeweiligen Verstärkungseinsatzes 28 ein. Mit anderen Worten weist jeder der beiden gegenüberliegenden Verstärkungseinsätze 28 eine Öffnung 21 auf, die Teil eines Formschlussabschnitts 19 der jeweiligen Verstärkungseinsätze 28 ist. Die Öffnungen 21 der beiden gegenüberliegenden Verstärkungseinsätze 28 sind fluchtend ausgebildet. Die jeweilige Öffnung 21 weist eine von einer kreisrunden Form abweichende Querschnittskontur 22 auf (siehe Fig. 5). Die Querschnittskontur 22 der Öffnung 21 sowie die Fixierungskontur 23 der Fixierwelle 17 sind im Wesentlichen pilzförmig ausgebildet. Konkret weisen die Querschnittskontur 22 der Öffnung 21 und die Fixierungskontur 23 jeweils einen kreisförmigen Konturabschnitt 24 auf, der an zwei in Bezug auf die Längsachse L liegende geradlinige Konturabschnitte 25 angrenzt. Die beiden liegenden Konturabschnitte 25 grenzen jeweils an einen in Bezug auf die Längsachse L stehenden geradlinigen Konturabschnitt 25'. Die Querschnittskontur 22 der Öffnung 21 umfasst somit durch die geradlinigen Konturabschnitte 25, 25' zwei Stufen, an denen sich die Fixierungskontur 23 der Fixierwelle 17 abstützen kann bzw. abstützt.

Die Konturabschnitte der Querschnittskontur 22 sowie die Fixierungskontur 23 umfassen Flächen, die zum Festsetzen miteinander in Kontakt stehen. Dabei kann ein Maßunterschied zwischen der Querschnittskontur 22 und der Fixierungskontur 23 von bis zu 5% vorgesehen sein, um die Längsverschiebbarkeit der Fixierwelle 17 zu gewährleisten.

Wie in Fig. 1 zu sehen ist, ist der kreisförmige Konturabschnitt 24 in Umfangsrichtung teilzylindrisch ausgebildet. Die geradlinigen Konturabschnitte 25, 25' sind Abflachungen 27. Diese sind vorzugsweise durch eine Fräsbearbeitung der Fixierwelle 17 hergestellt. Die beiden stehenden Abflachungen 27 der Fixierwelle 17 begrenzen einen zur Längsachse L orthogonalen Steg 52, der in den teilzylindrischen Teil der Fixierungskontur 23 mündet. Der Steg 52 weist eine Breite quer zur Längsachse L auf, die kleiner als ein Außendurmesser der Fixierwelle 17 ist.

Der Steg 52 geht in die an die Fixierungskontur 23 anschließende Lösekontur 26 über. Der Steg 52 ist im Bereich der Lösekontur 26 über den gesamten Querschnitt zur Längsachse L stehend ausgebildet. Mit anderen Worten schließt die pilzförmige Fixierungskontur 23 an die Lösekontur 26 an, die I-förmig ausgebildet ist.

In Fig. 5 ist gut zu erkennen, dass die Öffnung 21 der Verstärkungseinsätze 28 nach außen offen, konkret nach unten offen, ausgebildet ist. Dabei begrenzen zwei gegenüberliegende Abflachungen, insbesondere die stehenden geradlinigen Konturabschnitte 25, 25' einen Spalt, über den das Schienenelement 29 auf die Fixierwelle 17 im Bereich der Lösekontur 26 aufsetzbar ist. Der Spalt weist im Wesentlichen eine Breite auf, die der Breite des Stegs 52 entspricht. Damit kann das Schienenelement 29 in der Lösestellung der Fixierwelle 17 auf die Lösekontur 26 aufgesetzt und anschließend durch die Translationsbewegung der Fixierwelle 17 über die Fixierungskontur 23 an der entsprechenden Position fixiert werden. Das Festsetzen und Lösen des Schienenelements 29 erfolgt dabei nach dem Schlüssel/Loch-Prinzip.

Zum Einlegen des Schienenelements 29 in eines der Aussparungspaare befindet sich die Fixierwelle 17 in der Lösestellung. Das Schienenelement 29 wird mit den in den Verstärkungseinsätzen 28 nach unten offenen Öffnungen 21 auf die Lösekontur 26, insbesondere den Steg 52, aufgeschoben. In diesem Zustand ist das Schienenelement 29 und somit die Seitenführungsvorrichtung 11 lose eingelegt. Bei Bedarf kann sie in diesem Zustand aus dem Aussparungspaar genommen und an eine andere der Positionen versetzt werden.

Um das Schienenelement 29 gegen ein Abheben zu sichern, wird die Fixierwelle 17 in Längsrichtung v verschoben, sodass die Fixierungskontur 23 in die Öffnung 21 einfährt und mit der Querschnittskontur 22 der Öffnung 21 einen Formschluss bildet. Der Formschluss wird durch das Verschieben der Fixierwelle 17 an beiden gegenüberliegenden Verstärkungseinsätzen 28 durch eine separate Fixierungskontur 23 der Fixierwelle 17 gebildet. In diesem Zustand befindet sich die Fixierwelle 17 in der Fixierstellung. Das Schienenelement 29 und somit die Seitenführungsvorrichtung 11 ist festgesetzt und somit gegen ein Abheben gesichert.

Des Weiteren geht aus Fig. 5 und 6 hervor, dass der Formschlussabschnitt 19 im Wesentlichen dreieckförmig ausgebildet ist und einen Fortsatz 53 umfasst, der in der Wandung der Längsschenkel 49 des Schienenelements 29 angeordnet ist. der Fortsatz 53 steht mit der Wandung der Längsschenkel 49 in Kontakt. Die Öffnung 21 durchdringt den Fortsatz 53 vollständig.

Wie in Fig. 6 gezeigt ist, umfasst der jeweilige Verstärkungseinsatz 28 ferner einen Abstützabschnitt 18, der auf einer Innenseite angeordnet ist. Konkret ist der Abstützabschnitt 18 in das Schienenelement 29 integriert angeordnet. An dem Verstärkungseinsatz 28 ist der Abstützabschnitt 18 auf einer einem Schieneninnenraum 54 zugewandten Seite angeordnet. Der Abstützabschnitt 18 bildet den plattenförmigen Teil des Verstärkungseinsatzes 28. Von dem Abstützabschnitt 18 ausgehend erstreckt sich der Fortsatz 53 des Formschlussabschnitts 19.

Der Abstützabschnitt 18 dient zur Aufnahme von Querkräften, die quer zur Schienenlängsrichtung an dem Schienenelement 29 wirken, sowie zur Einleitung der aufgenommenen Querkräfte in das Gehäuse 30 der Festsetzvorrichtung 14. Die Übertragung der Kräfte von dem Schienenelement 29 auf das Gehäuse 30 erfolgt stets auf Druck. D.h., unabhängig davon, ob an dem Schienenelement 29 Querkräfte als Zugkräfte oder Druckkräfte auftreten, werden diese auf Druck von dem Verstärkungseinsatz 28 aufgenommen und auf Druck von dem Verstärkungseinsatz 28 auf das Gehäuse 30, konkret den ersten Gehäusebereich 31 übertragen.

Der Abstützabschnitt 18 des jeweiligen Verstärkungseinsatzes 28 weist eine Stufe 34 auf, die einem der Längsschenkel 49 des Schienenelements 29 zugewandt ist. An der Stufe 34 liegt das Schienenelement 29 an. Konkret liegt der Längsschenkel 49 des Schienenelements 29 an einer Stufenwand und einem Stufenboden an, die gemeinsam die Stufe 34 bilden. Auf einer der Stufe 34 gegenüberliegenden Seite weist der Abstützabschnitt 18 eine Anlagefläche 35 auf. Die Anlagefläche 35 ist in dem Schieneninnenraum 54 zugewandt und somit bezogen auf das Schienenelement 29 innenliegend angeordnet. Die Anlagefläche 35 steht im Belastungsfall, in dem entsprechend Querkräfte aufgenommen und übertragen werden, mit dem ersten Gehäusebereich 31 in Kontakt. Dabei wird der Verstärkungseinsatz 28 mit der Anlagefläche 35 gegen den ersten Gehäusebereich 31 gepresst. Mit anderen Worten steht die Anlagefläche 35 mit dem ersten Gehäusebereich 31 im Belastungsfall in direktem Kontakt. Treten keine Querbelastungen auf, d.h. im Nichtbelastungsfall, kann der erste Gehäusebereich 31 von einer oder beiden Anlageflächen 35 der Verstärkungseinsätze 28 einen Abstand aufweisen.

Wie in Fig. 6 oder auch in Fig. 4 gezeigt ist, ragt das Gehäuse 30 mit dem ersten Gehäusebereich 31 in das Schienenelement 29 ein. Konkret greift das Gehäuse 30 mit dem ersten Gehäusebereich 31 in den Schieneninnenraum 54 des Schienenelements 29 ein. Der erste Gehäusebereich 31 weist an beiden Längsenden einen Anschlag 32 auf, der der Anlagefläche 35 des jeweiligen Verstärkungseinsatzes 28 gegenüber angeordnet ist. Im Belastungsfall schlägt die Anlagefläche 35 an einem dem jeweils gegenüberliegenden Anschlag 32 des ersten Gehäusebereichs 31 zur Kraftübertragung an. Die zweiten Gehäusebereiche 33 bzw. der jeweils dem ersten Gehäusebereich 31 in Längsrichtung v gegenüberliegende Gehäusebereich 31, 33 ist im Belastungsfall sowie im Nichtbelastungsfall von dem in der Aussparung 15 befindlichen Verstärkungseinsatz 28 beabstandet. Somit wird verhindert, dass auftretende Querkräfte auf Zug von den Verstärkungseinsätzen 28 auf die zweiten Gehäusebereiche 33 bzw. auf die dem ersten Gehäusebereich 31 gegenüberliegenden Gehäusebereiche 31, 33 übertragen wird und dadurch der Kraftfluss über die Schraubenverbindungen verläuft. Dies könnte zum Versagen der Schraubenverbindungen führen. Die vorstehend beschriebene Kraftübertragung gilt nicht nur für die in den Fig. 1 bis 8 gezeigte Position A, sondern auch für jede der weiteren unterschiedlichen Positionen B, C, D.

Gemäß Fig. 1, 2 und 4 umfasst die Halteeinheit 12 zwei Federelemente 36, die die Festsetzvorrichtung 14 in Längsrichtung v federnd lagern. Alternativ können nur ein Federelement 36 oder mehrere Federelemente 36 zur federnden Lagerung der Festsetzvorrichtung 14 vorgesehen sein.

Die Federelemente 36 sind einander an der Längsachse L gegenüber an dem Befestigungsrahmen 13 angeordnet. Der Befestigungsrahmen 13 weist für jedes Federelement 36 einen Aufnahmeraum 55 auf, in dem das jeweilige Federelement 36 angeordnet ist. Das jeweilige Federelement 36 stützt sich einerseits an einem Widerlager 56 des Befestigungsrahmens 13 ab und steht andererseits mit dem in Längsrichtung verschiebbaren Gehäuse 30 in Kontakt. Dazu weist das Gehäuse 30 flügelartige Anlagebereiche 57 auf, über die das Gehäuse 30 mit den Federelementen 36 längsbeweglich in Kontakt steht. Die Federelemente 36 sind an einem Längsende des Befestigungsrahmens 13 angeordnet.

In Fig. 4 ist gezeigt, dass die Federelemente 36 V-förmig ausgebildet sind. Die Federelemente 36 stehen mit deren Enden mit dem Widerlager 56 und dem flügelartigen Anlagebereich 57 des Gehäuses 30 in Kontakt. An einem Scheitelpunkt der Federelemente 36 sind diese in einer Ausnehmung des Befestigungsrahmens 13, insbesondere um eine stehende Rotationsachse, gelagert. Entlang der Längsachse L ist an der Axialposition der Federelemente 36 der Betätigungshebel 48 angeordnet.

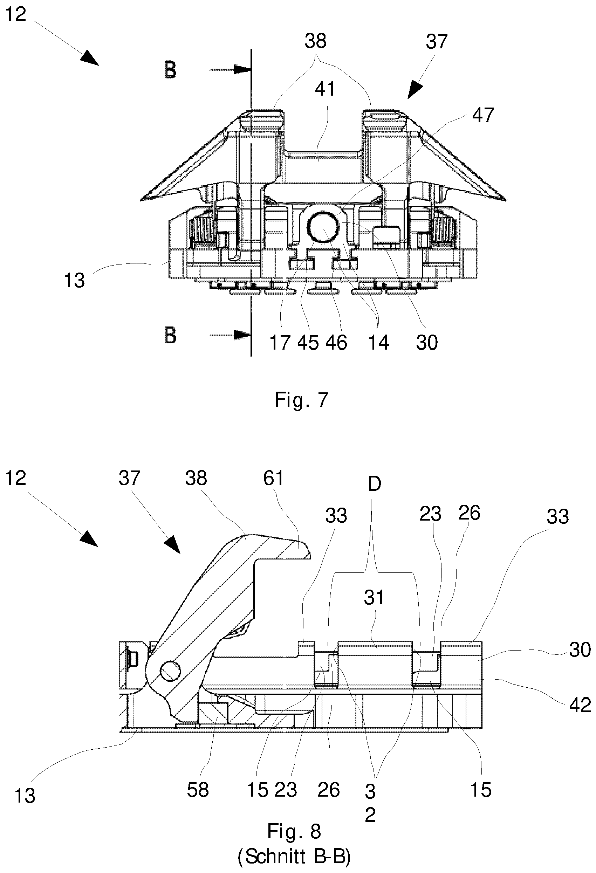

Wie in den Fig. 1 und 3 gut zu erkennen ist, ist eine der vier Positionen für die Seitenführungsvorrichtung 11 an einem Längsende 42 des Befestigungsrahmens 13 vorgesehen. Dabei handelt es sich um die Position D. Innerhalb der Position D ist ein Riegel 37 mit einer Riegelkralle 38 an dem Befestigungsrahmen 13 angeordnet. Der Riegel 37 grenzt dabei an die innenliegende Aussparung 15 des Aussparungspaares der Position D an. Der Riegel 37 ist an dem Befestigungsrahmen 13 um eine quer zur Längsrichtung v liegende Rotationsachse drehbeweglich befestigt. An der Rotationsachse sind zwei Federn 59, insbesondere Spiralfedern, angeordnet, die den Riegel 37 in eine von der Position D abgewandte Richtung drehbeweglich vorspannen (siehe Fig. 3). Um den Riegel 37 und somit die Riegelkralle 38 in einer Arbeitsposition zu halten, sind quer zur Längsrichtung v verschiebbare Backen 58 in dem Befestigungsrahmen 13 angeordnet, die in Fig. 8 ersichtlich sind. Die Backen 58 sind zwischen einer Blockierstellung und einer Freigabestellung quer zur Längsachse L beweglich. In der Blockierstellung stehen die Backen 58 mit einer Nase des Riegels 37 in Kontakt. Die Backen 58 bilden für den Riegel 37 einen Anschlag, um eine Drehbewegung des Riegels 37 um die Rotationsachse durch die vorgespannten Federn 59 zu blockieren. In der Arbeitsposition kann der Riegel 37 seine führende und haltende Funktion in Bezug auf ein Frachtstück ausführen.

Werden die Backen 58 in die Freigabestellung verschoben, schwenken die Federn 59 den Riegel 37 in eine rückgestellte Parkposition. Die Backen 58 weisen für die Parkposition einen weiteren Anschlag auf, an der der Riegel 37 anliegt.

Des Weiteren ist der Riegel 37 zur Position D hin um die Rotationsachse abklappbar. Dies kann beispielsweise beim Überfahren des Riegels 37 von Vorteil sein. Der Riegel 37 kann also zusätzlich zur Parkposition eine abgesenkte Ruheposition einnehmen.

Wie in den Fig. 1 bis 4 zu erkennen ist, ist die Riegelkralle 38 des Riegels 37 abschnittsweise zweigeteilt. Die Riegelkralle 38 ist gabelförmig ausgebildet. Die Riegelkralle 38 weist zwei in Längsrichtung v verlaufende Krallenschenkel 61 auf, die an der Längsachse L beidseitig vorgesehen sind. Die Krallenschenkel 61 sind quer zur Längsrichtung v voneinander beabstandet. Die Krallenschenkel 61 weisen vorzugsweise einen Abstand von 5 cm bis 15 cm (ca. 1,95 Zoll bis 5,9 Zoll), insbesondere von 5 cm bis 10 cm (ca. 1,95 Zoll bis ca. 3,9 Zoll), bevorzugt von 7 cm (ca. 2,75 Zoll) voneinander auf. Die Krallenschenkel 61 sind über ein Brückenelement 41 miteinander verbunden. Das Brückenelement 41 erstreckt sich quer zur Längsachse L und verbindet die beiden Krallenschenkel 61. Die Riegelkralle 38 ist einstückig ausgebildet. Das Brückenelement 41 überstreckt die Festsetzvorrichtung 14. Um den Riegel 37 in die abgesenkte Ruheposition zu verschwenken, weist die Fixierwelle 17 in einem obenliegenden Bereich eine Abflachung auf. In diesem Bereich ist das Gehäuse 30 freigestellt, sodass das Brückenelement 41 im abgesenkten Zustand des Riegels 37 aufgenommen werden kann.

In den Fig. 1 bis 4 ist gezeigt, dass die Seitenführung 10 eine Führungseinheit 40 mit zwei Führungsrollen 43 und einem Rollengehäuse 44 aufweist. Die Führungsrollen 43 sind in dem Rollengehäuse 44 drehbeweglich angeordnet. Die Führungsrollen 43 sind walzenförmig. Das Rollengehäuse 44 bildet einen Rahmen, der im vorliegenden Ausführungsbeispiel an der Position C in das zugehörige Aussparungspaar eingelegt und durch die Fixierwelle 17 fixiert ist. Der Rahmen weist dazu an der Stelle jeder Aussparung 15 eine Öffnung auf, die der Öffnung 21 des Verstärkungseinsatzes 28 entspricht. Hinsichtlich der Ausgestaltung der Öffnungen des Rahmens wird auf die vorstehende Beschreibung zur Öffnung 21 verwiesen. Die Führungseinheit 40 ist an den Riegel 37 angrenzend angeordnet. Es ist möglich, die Führungseinheit 40 an jeder der unterschiedlichen Positionen A, B, C, D in ein Aussparungspaar einzulegen und durch die Fixierwelle 17, wie das Schienenelement 29, festzusetzen.

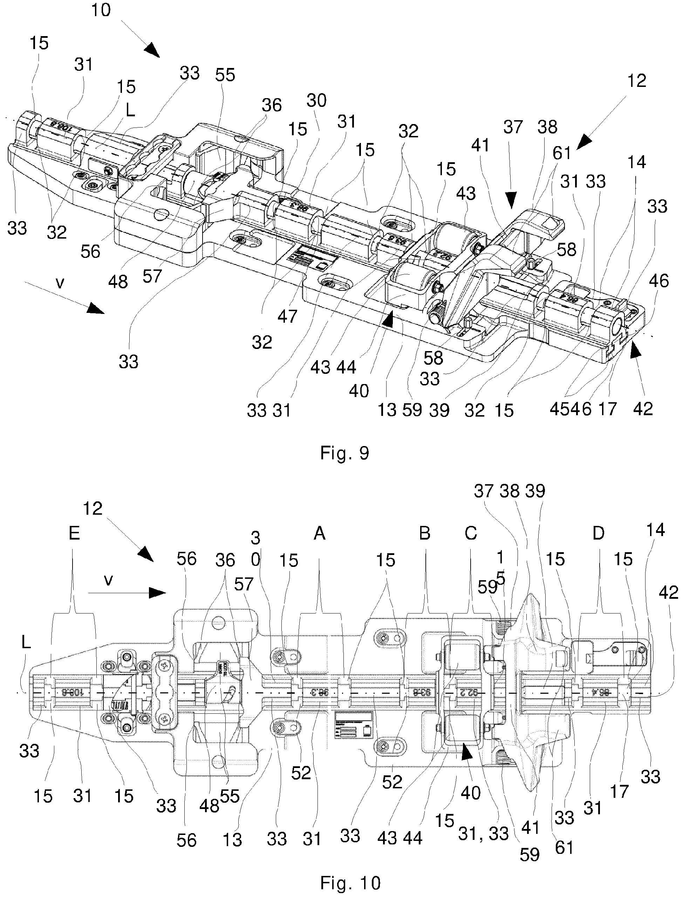

Fig. 9 bis 11 zeigen eine Halteeinheit 12 einer Seitenführung 10 nach einem weiteren erfindungsgemäßen Ausführungsbeispiel. Im Unterschied zur Seitenführung 10 gemäß Fig. 1 bis 8 weist bei der Seitenführung 10 gemäß Fig. 9 bis 11 die Halteeinheit 12 einen verlängerten Befestigungsrahmen 13 auf, um eine weitere Position an der Festsetzvorrichtung 14 für die nicht dargestellte Seitenführungsvorrichtung 11 zu ermöglichen. Insgesamt weist die Seitenführung 10 gemäß Fig. 9 bis 11 fünf Positionen A, B, C, D, E entlang der Längsachse L auf, an der die Seitenführungsvorrichtung 11 festgesetzt werden kann. Die weitere Position E ist an einem zweiten Längsende des Befestigungsrahmens 13 vorgesehen. Dazu weist die Festsetzvorrichtung 14 ein weiteres Aussparungspaar zur Aufnahme des Schienenelements 29 auf. Die Fixierwelle 17 weist zusätzlich zwei Fixierungskonturen 23 und zwei Lösekonturen 26, an den Axialstellen der zusätzlichen Aussparungen 15 auf. Hinsichtlich der Ausgestaltung, Anordnung sowie des Zusammenwirkens der in den Fig. 9 bis 11 gezeigten Komponenten wird auf die vorstehende Beschreibung zu der Seitenführung 10 gemäß den Fig. 1 bis 8 verwiesen.

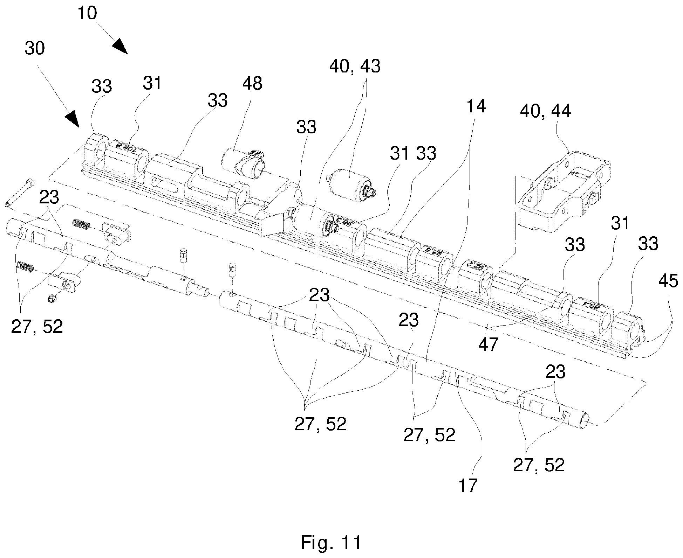

Ein weiterer Unterschied zur Seitenführung 10 gemäß Fig. 1 bis 8 liegt bei diesem Ausführungsbeispiel in der Position der Federelemente 36. Diese sind zwischen der Position E und der Position A entlang der Längsachse L angeordnet. Die in Fig. 11 gezeigte Explosionsdarstellung illustriert exemplarisch für die Seitenführung 10 gemäß Fig. 1 bis 8 sowie die Seitenführung 10 gemäß Fig. 9 bis 11 die Ausgestaltung, des Gehäuses 30 und der Fixierwelle 17, insbesondere hinsichtlich der Fixierungs- und Lösekonturen.

Generell umfasst die Seitenführungsvorrichtung 11, der Seitenführungen 10 gemäß beider vorstehend beschriebener Ausführungsbeispiele, an dem Schienenelement 29 angeordnete Riegel zum Halten und/oder Führen von Frachtstücken. Derartige Riegel können sogenannte X-Riegel und/oder Z-Riegel (siehe beispielsweise Fig. 1 oder 3) und/oder Y-Riegel sein, die Frachtstücke entsprechend sicher führen und fixieren.

### Bezugszeichenliste

- 10: Seitenführung
- 11: Seitenführungsvorrichtung
- 12: Halteeinheit
- 13: Befestigungsrahmen
- 14: Festsetzvorrichtung
- 15: Aussparungen
- 16: Kontaktelement
- 17: Fixierelement, Fixierwelle
- 18: innenseitiger Abstützabschnitt
- 19: Formschlussabschnitt
- 21: Öffnung
- 22: Querschnittskontur
- 23: Fixierungskontur
- 24: kreisförmiger Konturabschnitt
- 25, 25': geradliniger Konturabschnitt
- 26: Lösekontur
- 27: Abflachung
- 28: plattenförmiger Verstärkungseinsatz
- 29: Schienenelement
- 30: Gehäuse
- 31: erster Gehäusebereich
- 32: Anschlag
- 33: zweiter Gehäusebereich
- 34: Stufe
- 35: innenliegende Anlagefläche
- 36: Federelement
- 37: Riegel
- 38: zweigeteilte Riegelkralle
- 39: abgeflachter Bereich
- 40: Führungseinheit
- 41: Brückenelement
- 42: Längsende
- 43: Führungsrolle
- 44: Rollengehäuse
- 45: Führungsfortsätze
- 46: Ausnehmungen
- 47: Durchgangsbohrung
- 48: Betätigungshebel
- 49: Längsschenkel des Schienenelements
- 51: Befestigungsmittel
- 52: orthogonaler Steg
- 53: Fortsatz des Formschlussabschnitts
- 54: Schieneninnenraum
- 55: Aufnahmeraum
- 56: Widerlager
- 57: flügelartige Anlagebereiche
- 58: Backen
- 59: Federn
- 61: Krallenschenkel
- A: erste Position
- B: zweite Position
- C: dritte Position
- D: vierte Position
- E: fünfte Position
- v: Längsrichtung
- L: Längsachse

## Patentansprüche

1. Seitenführung (10) zum Führen und/oder Befestigen von Frachtstücken, insbesondere von Containern und/oder Paletten, in einem Flugzeug, die wenigstens eine Seitenführungsvorrichtung (11) und wenigstens eine Halteeinheit (12) für die Seitenführungsvorrichtung (11) aufweist, wobei die Halteeinheit (12) einen sich in Längsrichtung (v) erstreckenden Befestigungsrahmen (13) und wenigstens eine am Befestigungsrahmen (13) angeordnete Festsetzvorrichtung (14) umfasst, die eine Vielzahl von sich quer zur Längsrichtung (v) erstreckende Aussparungen (15) aufweist, wobei die Seitenführungsvorrichtung (11) an unterschiedlichen Positionen (A, B, C, D, E) in jeweils wenigstens eine der Aussparungen (15) einlegbar ist und im eingelegten Zustand an den unterschiedlichen Positionen (A, B, C, D, E) durch die Festsetzvorrichtung (14) festsetzbar ist, wobei die Seitenführungsvorrichtung (11) wenigstens ein Kontaktelement (16) aufweist, das im eingelegten Zustand mit wenigstens einem in Längsrichtung (v) verschiebbaren Fixierelement (17) der Festsetzvorrichtung (14) in Eingriff bringbar ist oder in Eingriff steht,
**dadurch gekennzeichnet, dass**
die Festsetzvorrichtung (14) in Längsrichtung (v) verschiebbar in dem Befestigungsrahmen (13) angeordnet ist und wenigstens ein Federelement (36) vorgesehen ist, das an dem Befestigungsrahmen (13) abstützend angeordnet ist und die Festsetzvorrichtung (14) in Längsrichtung (v) federnd lagert.

2. Seitenführung (10) nach Anspruch 1,
**dadurch gekennzeichnet, dass**
das wenigstens eine Kontaktelement (16) wenigstens einen innenseitigen Abstützabschnitt (18) für die Festsetzvorrichtung (14) zum Einleiten von auftretenden Kräften und/oder wenigstens einen Formschlussabschnitt (19) mit wenigstens einer von einer kreisrunden Form abweichenden Querschnittskontur (22) aufweisenden Öffnung (21) zum Eingreifen des Fixierelements (17) aufweist.

3. Seitenführung (10) nach Anspruch 2,
**dadurch gekennzeichnet, dass**
das Fixierelement (17) wenigstens eine Fixierungskontur (23) aufweist, mit der das Fixierelement (17) in einer Fixierstellung in die Querschnittskontur (22) der Öffnung (21) zum Festsetzen der Seitenführungsvorrichtung (11) formschlüssig eingreift.

4. Seitenführung (10) nach Anspruch 2 oder 3,
**dadurch gekennzeichnet, dass**
die Fixierungskontur (23) des Fixierelements (17) und/oder die Querschnittskontur (22) der Öffnung (21) wenigstens einen zumindest teilweise kreisförmigen Konturabschnitt (24) und wenigstens einen geradlinigen Konturabschnitt (25, 25') aufweisen.

5. Seitenführung (10) nach Anspruch 3 oder 4,
**dadurch gekennzeichnet, dass**
das Fixierelement (17) wenigstens eine Lösekontur (26) mit wenigstens einer Abflachung (27) aufweist, die in Längsrichtung (v) an die Fixierungskontur (23) angrenzt und derart ausgebildet ist, dass die Seitenführungsvorrichtung (11) in einer Lösestellung des Fixierelements (17) in wenigstens eine der Aussparungen (15) einlegbar oder aus dieser entnehmbar ist.

6. Seitenführung (10) nach einem der vorhergehenden Ansprüche,
**dadurch gekennzeichnet, dass**
das Kontaktelement (16) durch einen plattenförmigen Verstärkungseinsatz (28), insbesondere eine Stahl-Einsatzplatte, gebildet ist, der mit einem Schienenelement (29) der Seitenführungsvorrichtung (11) fest verbunden ist.

7. Seitenführung (10) nach einem der vorhergehenden Ansprüche,
**dadurch gekennzeichnet, dass**
die Festsetzvorrichtung (14) mit wenigstens einem ersten Gehäusebereich (31) im eingelegten Zustand in ein/das Schienenelement (29) der Seitenführungsvorrichtung (11) eingreift, wobei der erste Gehäusebereich (31) in Längsrichtung (v) wenigstens einen Anschlag für den Abstützabschnitt (18) des Kontaktelements (16) umfasst, um auftretende Kräfte von dem Schienenelement (29) aufzunehmen.

8. Seitenführung (10) nach Anspruch 5,
**dadurch gekennzeichnet, dass**
die Festsetzvorrichtung (14) wenigstens einen zweiten Gehäusebereich (33) aufweist, der im eingelegten Zustand der Seitenführungsvorrichtung (11) von dem Kontaktelement (16) beabstandet ist und mit dem ersten Gehäusebereich (31) zumindest eine der Aussparungen (15) an wenigstens einer der unterschiedlichen Positionen (A, B, C, D, E) begrenzt.

9. Seitenführung (10) nach einem der vorhergehenden Ansprüche, insbesondere nach Anspruch 7 oder 8,
**dadurch gekennzeichnet, dass**
der Abstützabschnitt (18) wenigstens eine Stufe (34) umfasst, mit der ein/das Schienenelement (29) der Seitenführungsvorrichtung (11) in Kontakt steht, um die auftretenden Kräfte, insbesondere Zug- und Druckkräfte, in Längsrichtung (v) des Befestigungsrahmens (13) auf die Festsetzvorrichtung (14) zu übertragen und/oder der Abstützabschnitt (18) wenigstens eine innenliegende Anlagefläche (35) aufweist, die dem ersten Gehäusebereich (31) zur Anlage zugewandt ist.

10. Seitenführung (10) nach einem der vorhergehenden Ansprüche,
**gekennzeichnet durch,**
wenigstens einen Riegel (37) mit einer zumindest abschnittsweise zweigeteilten Riegelkralle (38), der am Befestigungsrahmen (13) derart befestigt ist, dass die zweigeteilte Riegelkralle (38) von einer hochgestellten Arbeitsposition in eine abgesenkte Ruheposition verschwenkbar ist und/oder ein/der Riegel (37) an dem Befestigungsrahmen (13) derart befestigt ist, dass eine/die Riegelkralle (38) des Riegels (37) von einer Arbeitsposition in eine rückgestellte Parkposition verschwenkbar ist.

11. Seitenführung (10) nach Anspruch 9,
**dadurch gekennzeichnet, dass**
das Fixierelement (17) einen in Längsrichtung (v) abgeflachten Bereich (39) zur Aufnahme eines quer zur Längsrichtung (v) verlaufenden Brückenelements (41) der zweigeteilten Riegelkralle (38) aufweist.

12. Seitenführung (10) nach Anspruch 9 oder 10,
**dadurch gekennzeichnet, dass**
die Festsetzvorrichtung (14) zumindest zwei der Aussparungen (15) an einem Längsende (42) des Befestigungsrahmens (13) aufweist, wobei der Riegel (37) mit der zweigeteilten Riegelkralle (38) innenseitig angrenzt.

13. Seitenführung (10) nach einem der vorhergehenden Ansprüche,
**dadurch gekennzeichnet, dass**
die Festsetzvorrichtung (14) wenigstens drei, insbesondere wenigstens vier, Paare der Aussparungen (15) umfasst, sodass die Seitenführungsvorrichtung (11) an wenigstens drei, insbesondere vier, unterschiedlichen Positionen festsetzbar ist.

14. Seitenführung (10) nach einem der vorhergehenden Ansprüche,
**dadurch gekennzeichnet, dass**
wenigstens eine Führungsrolle (43) in einem Rollengehäuse (44) drehbeweglich gelagert ist, das an unterschiedlichen Positionen (A, B, C, D, E) in jeweils wenigstens eine der Aussparungen (15) einlegbar oder eingelegt ist.

15. Frachtdeck eines Flugzeugs mit wenigstens einer Seitenführung (10) nach einem der vorhergehenden Ansprüche, wobei die Seitenführung (10) eine Vielzahl von Halteeinheiten (12) aufweist, an denen die Seitenführungsvorrichtung (11) festgesetzt oder festsetzbar ist.

## Claims

1. A side guide (10) for guiding and/or fastening cargo items, in particular containers and/or pallets, in an aircraft, which has at least one side guide device (11) and at least one holding unit (12) for the side guide device (11), wherein the holding unit (12) comprises a fastening frame (13) extending in a longitudinal direction (v) and at least one securing device (14) arranged on the fastening frame (13), which has a plurality of recesses (15) extending transversely to the longitudinal direction (v), wherein the side guide device (11) is insertable at different positions (A, B, C, D, E) into at least one of the recesses (15) in each case and can be secured in the inserted state at the different positions (A, B, C, D, E) by the securing device (14), wherein the side guide device (11) has at least one contact element (16), which, in the inserted state, can be engaged or is engaged with at least one fixing element (17), displaceable in the longitudinal direction (v), of the securing device (14),
**characterized in that**
the securing device (14) is arranged displaceably in the longitudinal direction (v) in the fastening frame (13) and at least one spring element (36) is provided, which is arranged in a supporting manner on the fastening frame (13) and spring mounts the securing device (14) in the longitudinal direction (v).

2. The side guide (10) according to claim 1,
**characterized in that**
the at least one contact element (16) has at least one inside support section (18) for the securing device (14) for introducing occurring forces and/or at least one formfitting section (19) having at least one opening (21) having a cross-sectional contour (22) deviating from a circular shape for the engagement of the fixing element (17).

3. The side guide (10) according to Claim 2,
**characterized in that**
the fixing element (17) has at least one fixing contour (23), with which the fixing element (17) engages in a formfitting manner in a fixing position in the cross-sectional contour (22) of the opening (21) to secure the side guide device (11).

4. The side guide (10) according to Claim 2 or 3,
**characterized in that**
the fixing contour (23) of the fixing element (17) and/or the cross-sectional contour (22) of the opening (21) has/have at least one at least partially circular contour section (24) and at least one linear contour section (25, 25').

5. The side guide (10) according to Claim 3 or 4,
**characterized in that**
the fixing element (17) has at least one release contour (26) having at least one flattening (27), which adjoins the fixing contour (23) in the longitudinal direction (v) and is formed in such a way that the side guide device (11) is insertable into at least one of the recesses (15) or removable therefrom in a release position of the fixing element (17).

6. The side guide (10) according to any one of the preceding claims,
**characterized in that**
the contact element (16) is formed by a plate-shaped reinforcing insert (28), in particular a steel insert plate, which is firmly connected to a rail element (29) of the side guide device (11).

7. The side guide (10) according to any one of the preceding claims,
**characterized in that**
the securing device (14) engages with at least one first housing region (31) in the inserted state in a/the rail element (29) of the side guide device (11), wherein the first housing region (31) comprises at least one stop in the longitudinal direction (v) for the support section (18) of the contact element (16), to receive occurring forces from the rail element (29).

8. The side guide (10) according to Claim 5,
**characterized in that**
the securing device (14) has at least one second housing region (33), which is spaced apart from the contact element (16) in the inserted state of the side guide device (11) and, with the first housing region (31), delimits at least one of the recesses (15) at at least one of the different positions (A, B, C, D, E).

9. The side guide (10) according to any one of the preceding claims,
in particular according to Claim 7 or 8,
**characterized in that**
the support section (18) comprises at least one step (34), with which a/the rail element (29) of the side guide device (11) is in contact, to transmit the occurring forces, in particular traction and compression forces, in the longitudinal direction (v) of the fastening frame (13) to the securing device (14) and/or the support section (18) has at least one inside contact surface (35), which faces toward the first housing region (31) for contact.

10. The side guide (10) according to any one of the preceding claims,
**characterized by,**
at least one latch (37) having at least partially two-parted latch claw (38), which is fastened on the fastening frame (13) in such a way that the two-part latch claw (38) is pivotable from an upright working position into a lowered resting position and/or a/the latch (37) is fastened on the fastening frame (13) in such a way that a/the latch claw (38) of the latch (37) is pivotable from a working position into a retracted parked position.

11. The side guide (10) according to Claim 9,
**characterized in that**
the fixing element (17) has a region (39) flattened in the longitudinal direction (v) for accommodating a bridge element (41), extending transversely to the longitudinal direction (v), of the two-part latch claw (38).

12. The side guide (10) according to any one of Claims 9 to 10,
**characterized in that**
the securing device (14) has at least two of the recesses (15) at one longitudinal end (42) of the fastening frame (13), wherein the latch (37) having the two-part latch claw (38) adjoins on the inside.

13. The side guide (10) according to any one of the preceding claims,
**characterized in that**
the securing device (14) comprises at least three, in particular at least four pairs of the recesses (15), so that the side guide device (11) can be secured at at least three, in particular four different positions.

14. The side guide (10) according to any one of the preceding claims,
**characterized in that**
at least one guide roller (43) is rotatably mounted in a roller housing (44), which is insertable or inserted at different positions (A, B, C, D, E) into at least one of the recesses (15).

15. A cargo deck of an aircraft having at least one side guide (10) according to any one of the preceding claims, wherein the side guide (10) has a plurality of holding units (12), at which the side guide device (11) is secured or can be secured.

## Revendications

1. Guide latéral (10) pour guider et/ou fixer des éléments de fret, en particulier des conteneurs et/ou des palettes, dans un avion, qui présente au moins un dispositif de guidage latéral (11) et au moins une unité de retenue (12) pour le dispositif de guidage latéral (11), l'unité de retenue (12) comprenant un cadre de fixation (13) s'étendant dans la direction longitudinale (v) et au moins un dispositif de fixation (14) disposé sur le cadre de fixation (13), qui présente une pluralité d'évidements (15) s'étendant transversalement à la direction longitudinale (v), le dispositif de guidage latéral (11) pouvant être inséré à différentes positions (A, B, C, D, E) dans au moins un des évidements (15) et, à l'état inséré, peut être fixé aux différentes positions (A, B, C, D, E) par le dispositif de fixation (14), le dispositif de guidage latéral (11) présentant au moins un élément de contact (16) qui, à l'état inséré, peut être mis en prise ou est en prise avec au moins un élément de fixation (17) du dispositif de fixation (14) pouvant coulisser dans la direction longitudinale (v),
**caractérisé en ce que**
le dispositif de fixation (14) est disposé de manière coulissante dans la direction longitudinale (v) dans le cadre de fixation (13) et au moins un élément élastique (36) est prévu, qui est disposé de manière à s'appuyer sur le cadre de fixation (13) et qui supporte le dispositif de fixation (14) de manière élastique dans la direction longitudinale (v).

2. Guide latéral (10) selon la revendication 1,
**caractérisé en ce que**
ledit au moins un élément de contact (16) présente au moins une partie d'appui intérieure (18) pour le dispositif de fixation (14) afin d'introduire les forces transversales appliquées et/ou au moins une partie de liaison par complémentarité de forme (19) avec au moins une ouverture (21) présentant un contour en coupe transversale (22) s'écartant d'une forme circulaire pour l'engagement de l'élément de fixation (17).

3. Guide latéral (10) selon la revendication 2,
**caractérisé en ce que**
l'élément de fixation (17) présente au moins un contour de fixation (23) avec lequel l'élément de fixation (17) s'engage par complémentarité de forme dans une position de fixation dans le contour en coupe transversale (22) de l'ouverture (21) pour fixer le dispositif de guidage latéral (11).

4. Guide latéral (10) selon la revendication 2 ou la revendication 3,
**caractérisé en ce que**
le contour de fixation (23) de l'élément de fixation (17) et/ou le contour en coupe transversale (22) de l'ouverture (21) présentent au moins une partie de contour au moins partiellement circulaire (24) et au moins une partie de contour rectiligne (25, 25').

5. Guide latéral (10) selon la revendication 3 ou la revendication 4,
**caractérisé en ce que**
l'élément de fixation (17) présente au moins un contour de libération (26) avec au moins un méplat (27) qui est adjacent au contour de fixation (23) dans la direction longitudinale (v) et qui est conçu de telle sorte que le dispositif de guidage latéral (11) peut être inséré dans au moins l'un des évidements (15) ou retiré de celui-ci lorsque l'élément de fixation (17) est en position de libération.

6. Guide latéral (10) selon l'une des revendications précédentes,
**caractérisé en ce que**
l'élément de contact (16) est formé par un insert de renfort en forme de plaque (28), en particulier une plaque d'insertion en acier, qui est relié de manière fixe à un élément de rail (29) du dispositif de guidage latéral (11).

7. Guide latéral (10) selon l'une des revendications précédentes,
**caractérisé en ce que**
le dispositif de fixation (14) s'engage à l'état inséré avec au moins une première zone de boîtier (31) dans un/l'élément de rail (29) du dispositif de guidage latéral (11), la première zone de boîtier (31) comprenant dans la direction longitudinale (v) au moins une butée (32) pour la partie d'appui (18) de l'élément de contact (16) pour absorber les forces appliquées de l'élément de rail (29).

8. Guide latéral (10) selon la revendication 5,
**caractérisé en ce que**
le dispositif de fixation (14) présente au moins une deuxième zone de boîtier (33) qui, à l'état inséré du dispositif de guidage latéral (11), est espacée de l'élément de contact (16) et délimite avec la première zone de boîtier (31) au moins l'un des évidements (15) à au moins l'une des différentes positions (A, B, C, D, E).

9. Guide latéral (10) selon l'une des revendications précédentes,
**caractérisé en ce que**
la partie d'appui (18) comprend au moins un gradin (34) avec lequel un/l'élément de rail (29) du dispositif de guidage latéral (11) est en contact afin de transmettre les forces appliquées, en particulier les forces de traction et de pression, dans la direction longitudinale (v) du cadre de fixation (13) sur le dispositif de fixation (14) et/ou la partie d'appui (18) présente au moins une surface d'appui intérieure (35) tournée vers la première zone du boîtier (31) pour venir en appui.

10. Guide latéral (10) selon l'une des revendications précédentes,
**caractérisé par**
au moins un verrou (37) avec une griffe de verrouillage (38) divisée en deux au moins sur certaines parties, qui est fixé au cadre de fixation (13) de telle sorte que la griffe de verrouillage divisée en deux (38) puisse pivoter d'une position de travail relevée à une position de repos abaissée et/ou un/le verrou (37) est fixé au cadre de fixation (13) de telle sorte qu'une/la griffe de verrouillage (38) du verrou (37) puisse pivoter d'une position de travail à une position de stationnement rétractée.

11. Guide latéral (10) selon la revendication 9,
**caractérisé en ce que**
l'élément de fixation (17) présente une zone aplatie (39) dans la direction longitudinale (v) pour recevoir un élément de pont (41) de la griffe de verrouillage divisée en deux (38) qui s'étend transversalement à la direction longitudinale (v).

12. Guide latéral (10) selon la revendication 9 ou la revendication 10,
**caractérisé en ce que**
le dispositif de fixation (14) présente au moins deux des évidements (15) à une extrémité longitudinale (42) du cadre de fixation (13), le verrou (37) avec la griffe de verrouillage divisée en deux (38) étant adjacent du côté intérieur.

13. Guide latéral (10) selon l'une des revendications précédentes,
**caractérisé en ce que**
le dispositif de fixation (14) comprend au moins trois, en particulier au moins quatre paires d'évidements (15), de sorte que le dispositif de guidage latéral (11) peut être fixé à au moins trois, en particulier quatre positions différentes.

14. Guide latéral (10) selon l'une des revendications précédentes,
**caractérisé en ce**
**qu'**au moins un galet de guidage (43) est monté mobile en rotation dans un boîtier de galet (44) qui peut être inséré ou est inséré à différentes positions (A, B, C, D, E) dans au moins l'un des évidements (15).

15. Pont de chargement d'un avion doté d'au moins un guide latéral (10) selon l'une des revendications précédentes, le guide latéral (10) présentant une pluralité d'unités de retenue (12) sur lesquelles le dispositif de guidage latéral (11) est fixé ou peut être fixé.
